# FASCICULE DE BREVET EUROPEEN

(11) **EP 2 454 320 B1**
(45) Date de publication et mention de la délivrance du brevet: **12.12.2018**
(21) Numéro de dépôt: 10751998.5
(22) Date de dépôt: 12.07.2010
(51) Int. Cl.: C08L 67/04, C08L 99/00, C08L 3/02, C08L 101/16, C08K 5/11, C08K 5/103, C08L 3/00, C08L 71/00

(54) **COMPOSITION, PROCEDE DE PREPARATION ET UTILISATION POUR AMELIORER LA FLUIDITE ET LA RESISTANCE A LA TEMPERATURE DE MATERIAUX COMPOSITES**
ZUSAMMENSETZUNG, VERFAHREN FÜR IHRE HERSTELLUNG UND IHRE VERWENDUNG ZUR VERBESSERUNG DER FLIESSFÄHIGKEIT UND TEMPERATURBESTÄNDIGKEIT VON VERBUNDSTOFFEN
COMPOSITION, METHOD FOR PREPARING SAME, AND USE THEREOF FOR IMPROVING THE FLUIDITY AND TEMPERATURE RESISTANCE OF COMPOSITE MATERIALS

(30) Priorité: 13.07.2009 FR 0954864
(43) Date de publication de la demande: 23.05.2012
(73) Titulaire: Valagro Carbone Renouvelable Poitou-Charentes, 86022 Poitiers Cedex (FR)
(72) Inventeur: BARBIER, Jacques, F-86360 Montamise (FR); DEVER, Cédric, F-86130 Jaunay-Clan (FR)
(74) Mandataire: Aquinov
(86) Numéro de dépôt international: PCT/FR2010/051465
(87) Numéro de publication internationale: WO 2011/007088

(56) Documents cités:
- EP-A1- 1 327 663
- EP-A1- 1 719 797
- EP-A1- 2 050 790
- WO-A1-94/03543
- WO-A1-95/24447
- WO-A1-2004/113433
- US-A- 5 591 491
- US-A1- 2005 171 247

## Description

La présente invention se rapporte à une composition, un mélange maître, selon la revendication 1, utilisé pour améliorer la résistance thermique et la fluidité à l'état fondu de matériaux composites, notamment de composites à base de polymère(s) biodégradable(s) éventuellement chargé(s) en farine(s) végétale(s).

L'invention concerne également un procédé de préparation dudit mélange maître, son utilisation et les matériaux composites l'incorporant.

On sait que les matériaux à biodégradabilité contrôlée sont de plus en plus recherchés, en particulier les matériaux aptes à se dégrader en milieu naturel, sans nécessiter d'apport spécifique de micro-organismes tels que les matériaux à base de mélanges de polymère(s) biodégradable(s) ou bio-polymères et de farine(s) végétale(s).

Ces matériaux, à base de bio-polymères ou de mélanges de bio-polymères et de farines végétales, sont généralement utilisés par la mise en oeuvre de techniques de type injection, extrusion soufflage, extrusion gonflage, calandrage, etc., qui demandent une fluidité importante à l'état fondu et une résistance thermique élevée.

Or, les bio-polymères et les mélanges bio-polymères/farines végétales présentent une fluidité faible à l'état fondu et/ou une faible résistance thermique.

Une solution utilisée pour améliorer la fluidité de ces matériaux est de leur adjoindre un plastifiant, par exemple un phtalate, un benzoate, un époxyde, etc., qui permet de générer un produit flexible, résistant et plus facile à manipuler.

Le rôle d'un plastifiant est multiple. Il doit présenter une excellente compatibilité avec le biopolymère ou le composite à plastifier, présenter un effet plastifiant et ne montrer aucune perte de performance du fait d'une volatilisation ou d'une exsudation.

Toutefois les plastifiants actuellement employés dans l'industrie des polymères sont d'origine pétrochimique, non renouvelables, et ne sont pas biodégradables.

On se retrouve donc au final avec des matériaux qui ne sont pas écologiques et qui ne se dégradent pas entièrement.

Pour répondre à cette problématique écologique, des plastifiants issus de molécules naturelles ont été développés pour être utilisés avec des bio-plastiques. A titre d'exemple on peut citer la triacétine (N. Ljungberg and B.

Wesselen, J Appl Polym Sci 86 (2002), p. 1227), des dérivés de citrate (L.V. Labrecque, R.A. Kumar, V. Dave, R.A. Gross and S.P. McCarthy, J Appl Polym Sci 66 (1997), p. 1507), le polyéthylene glycol ou PEG (S. Jacobsen and H.G. Fritz, Polym Eng Sci 39 (1999), p. 1303), et le polyéthylène oxide (A.J. Nijenhuis, E. Colstee, D.W. Grijpma and A.J. Pennings, Polymer 37 (1996), p. 5849).

Cependant ces plastifiants d'origine naturelle présentent des inconvénients en terme de performances et de caractéristiques mécaniques et ne sont pas des solutions satisfaisantes.

Par ailleurs, en ce qui concerne l'amélioration de la résistance à la température des matériaux composites, il convient d'augmenter leur degré de cristallisation.

En effet, il est connu que la résistance thermique des polymères semi-cristallins tels que le Polyéthylène Téréphtalate augmente avec leur degré de cristallinité.

De nombreuses solutions ont ainsi été développées, comme par exemple l'ajout d'agents de nucléations ou la post-cristalliation après transformation tel qu'exposé dans la demande de brevet EP-1.463.619. Toutefois ces traitements ne sont pas satisfaisant notamment en terme d'efficacité, de simplicité et de coût.

Il existe donc un besoin pour un produit efficace capable à la fois d'améliorer la fluidité à l'état fondu et la résistance thermique des polymères biodégradables et des matériaux à base de polymères biodégradables, tout en conservant leurs propriétés mécaniques et leur caractère dégradable.

C'est ce à quoi répond la présente invention en proposant une composition ou mélange-maître, comprenant au moins un polyglycérol fonctionnalisé, au moins un bio-polymère et au moins une farine issue de carbone végétal, et éventuellement un plastifiant.

Des compositions comprenant des farines végétales ont déjà été décrites dans la demande WO94/03543 mais elles contiennent des produits issus de la pétrochimie et pas de polyglycérol fonctionnalisé, ainsi que dans la demande WO95/24447.

Toutefois, de façon surprenante, le co-mélange polyglycérol fonctionnalisé, bio-polymère et farine issue de carbone végétal, présente des propriétés remarquables en tant que plastifiant et en tant qu'exhausteur de la résistance thermique des matériaux composites.

Par polyglycérol fonctionnalisé on entend un polyglycérol obtenu par condensation de plusieurs unités de glycérol sur elles-mêmes et pour lesquelles une partie ou la totalité des groupements hydroxyle a été remplacée par d'autres groupements, préférentiellement des groupements esters. Une telle molécule répond à l'une des formules (1) et (2) suivantes : 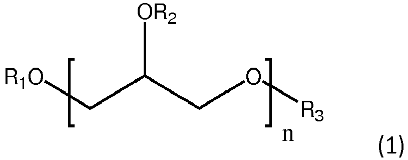 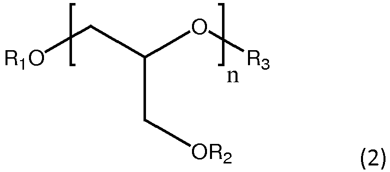 dans lesquelles R1, R2 et R3 représentent des hydrogènes ou des chaînes d'acide gras.

Par bio-polymère, on entend tout polymère biodégradable et/ou bio-sourcé. Un polymère bio-dégradable est un polymère qui se dégrade par l'action de micro-organismes sous forme de CO2, d'eau et d'une nouvelle biomasse. Un polymère bio-sourcé est un polymère issu en totalité ou en partie de ressources renouvelables.

Par farine issue de carbone végétale au sens de l'invention on entend aussi bien les farines issues de céréales que les farines ligno-cellulosiques.

Par mélange-maître au sens de l'invention on entend un mélange, à base d'un ou plusieurs polymère(s) fortement chargé en au moins un additif ou au moins une charge, destiné à être dilué ensuite dans un autre mélange afin d'y introduire ledit additif ou ladite charge.

L'invention se rapporte à l'utilisation de cette composition ou mélange-maître, selon la revendication 1, pour augmenter la fluidité à l'état fondu et la résistance thermique de matériaux composites.

En particulier, l'invention vise l'utilisation de cette composition biodégradable en tant que plastifiant et exhausteur de la résistance thermique de composites à base de bio-polymère(s) et/ou de bio-polymère(s) chargé(s) en farine(s) végétale(s).

L'invention vise aussi un procédé de préparation particulier de la composition polyglycérol fonctionnalisé, bio-polymère et farine issue de carbone végétal selon la revendication 1.

Enfin, l'invention concerne également les composites à base de bio-polymères éventuellement chargés en farine végétale, comprenant la composition selon la revendication 1.

Avantageusement, la présente invention permet d'obtenir des formulations à base de polymères biodégradables et/ou à base de polymères biodégradables chargés en farine(s) végétale(s) présentant une fluidité à l'état fondu importante et une bonne résistance thermique, tout en étant issues totalement de ressources naturelles et donc non néfastes pour l'environnement.

D'autres caractéristiques et avantages ressortiront de la description en détail de l'invention qui va suivre.

La présente invention vise donc une composition ou mélange maître comprenant entre 1 et 15% en poids de polyglycérol(s) fonctionnalisé(s), entre 25 et 94 % en poids de bio-polymère(s), et entre 5 et 60% en poids de farine(s) issue(s) de carbone végétal.

Les farines issues de carbone végétal sont préférentiellement des farines natives de céréale, comme des farines de blé, ou d'origine lignocellulosique, comme des farines de bois. Par farine native on entend une farine obtenue par broyage de la matière première sans purification ni ajout d'adjuvants.

Très préférentiellement, les farines issues de carbone végétal sont des farines amidonnées.

Les farines amidonnées peuvent être choisies parmi :
- les farines céréalières amylacées, telles que les farines de blé, maïs ou seigle,
- les farines de protéines, telles que les farines de féverole, lupin, colza, tournesol, soja ou caséine, et
- les farines lignocellulosiques, telles que des fibres du bois, chanvre ou lin.

Selon un mode de réalisation préféré, le polyglycérol fonctionnalisé est un ester de polyglycérol. Préférentiellement il s'agit d'un ester de polyglycérol ayant un degré de polymérisation de 1 à 20 avec une ou plusieurs fonctions acides choisies parmi :
- les acides gras saturés, de C1 à C32 comme l'acide stéarique, l'acide arachidique, l'acide mystirique, l'acide caprilique, l'acide isostéarique, etc.,
- les acides gras mono insaturés, comme l'acide palmitoléique, l'acide oléique, l'acide érucique, l'acide nervonique, et
- les acides gras poly insaturés, comme l'acide linoléique, l'acide α-linoléique, l'acide γ-linoléique, l'acide di-homo-γ-linoléique, l'acide arachidonique, l'acide éicosapentaénoïque, l'acide docosahexanoïque.

Selon un autre mode de réalisation, le polyglycérol fonctionnalisé est un polyglycérol acétylé ou un polyglycérol acétylé et estérifié.

A titre d'exemple, le polyricinoléate de polyglycérol est un polyglycérol fonctionnalisé particulièrement adapté pour la présente invention.

Selon l'invention les polyglycérols fonctionnalisés sont utilisés en tant que plastifiants pour des composites à base de polymères, en particulier à base d'au moins un polymère biodégradable chargé en farine végétale.

A titre d'exemple, les bio-polymères peuvent être choisis parmi :
- l'amidon et les mélanges d'amidon,
- les polypeptides,
- le polyvinylalcool,
- les polyhydroxyalkanoates,
- l'acide polylactique et les polylactates,
- la cellulose, et
- les polyesters.

Le mélange-maître selon l'invention comprend :
- entre 1 et 15% en poids de polyglycérol fonctionnalisé,
- entre 25 et 94% en poids de bio-polymère(s), et
- entre 5 et 60 % en poids de farine issue de carbone végétal, préférentiellement de farine amidonnée.

Selon une variante, la composition selon l'invention peut également comprendre un plastifiant. Il peut s'agir à titre d'exemple du glycérol, de dérivés de citrate comme l'acétyl tributyl citrate, ou de l'eau. Il peut être présent dans la composition entre 1% et 20%, préférentiellement entre 2% et 8%. Avantageusement, les différents composants du mélange selon l'invention agissent en synergie et permettent d'améliorer à la fois la fluidité à l'état fondu et la résistance thermique des matériaux composites, en particulier des matériaux composites à base de bio-polymère(s), éventuellement chargé(s) en farine végétale.

La composition selon l'invention peut être obtenue par la mise en oeuvre d'un procédé qui consiste à extruder un mélange d'un ou plusieurs polymères biodégradables, de farine issue de carbone végétal et d'au moins un polyglycérol fonctionnalisé, à des températures comprises entre 50 et 300°C, plus particulièrement entre 150 et 250°C.

Le mélange maître obtenu peut ensuite être introduit à une préparation de matériaux composites, notamment des matériaux composites à base de bio-polymères éventuellement chargés en farine végétale. L'ajout du mélange maître sur la préparation se fait par extrusion.

Préférentiellement la teneur massique du mélange maître dans le matériau composite est comprise entre 1% et 80%.

Il peut s'agir par exemple de matériaux composites à base de bio-polymère(s) qui peuvent être choisis parmi l'amidon et les mélanges d'amidon, les polypeptides, le polyvinylalcool, les polyhydroxyalkanoates, polydroxybutyrates et polyhydroxyva-lerates, l'acide polylactique et les polylactates, la cellulose, et les polyesters. Ces bio-polymères peuvent être chargés en farines végétales, comme par exemple : les farines céréalières amylacées, telles que les farines de blé, maïs ou seigle, les farines de protéines, telles que les farines de féverole, lupin, colza, tournesol, soja ou caséine, et les farines lignocellulosiques, telles que des fibres du bois, chanvre ou lin.

Avantageusement, les composites à base de polymères biodégradables éventuellement chargés en farine végétale comprenant le mélange maître selon l'invention présentent de bonnes propriétés mécaniques, une fluidité à l'état fondu améliorée, ainsi qu'une meilleure résistance thermique. Le mélange maître selon l'invention présente une bonne compatibilité avec les biopolymères ou les composites dont il faut améliorer les propriétés. Il présente également un bon effet plastifiant et ne montrent aucune perte de performance du fait d'une volatilisation ou d'une exsudation.

Ces caractéristiques peuvent être illustrées par les exemples qui vont suivre.

Les exemples sont réalisés sur des mélanges maître à base d'acide polylactique (PLA), de farine de blé amidonnée, d'esters de polyglycérol et d'eau.

Pour cet exemple :
- les caractéristiques en traction des matières plastiques ont été déterminées selon les normes ISO/R 527 et ISO 178,
- l'indice de fluidité à l'état fondu des matières plastiques suit la norme ISO 1133,
- la résilience des matériaux a été déterminée selon la norme ISO 179 à partir d'éprouvettes non entaillées,
- la résistance thermique a été déterminée selon la température de fléchissement sous charge (charge de 1,8 MPa, vitesse de montée en température de 120 ± 10 K/h) selon la norme ISO 75.

Le protocole opératoire est le suivant.

Des mélanges contenant x% de PLA, y% de farine de blé amidonée, des esters de polyglycérol de type polyricinoleate de polyglycérol, un plastifiant de type acétyl tributyl citrate et de l'eau ont été granulés à l'aide d'une extrudeuse corotative Clextral BC21 (L=600mm, L/d=24) à 170°C.

Les produits obtenus par granulation sont injectés sur une presse Arburg 100T afin de former des éprouvettes nécessaires à leurs caractérisations mécaniques.

Les résultats obtenus sont présentés dans le tableau suivant qui indique les caractéristiques mécaniques et rhéologiques des différents matériaux :

| Nom du mélange | | PLA AMI 7 | PLA AMI 11 |
|---|---|---|---|
| Teneur massique des composants du mélange (%) | | x = 54,3 | x = 56 |
| | | y = 17,4 | y = 34,5 |
| Température de déformation sous charge (°C) | | 53 | 52 |
| Resilience kJ/m² | | 6 | 4 |
| Fluidité à l'état fondu (190°C, 5kq) | | 17 | 0,4 |
| Traction | Contrainte Max. MPa Allongement à la rupture Module de traction MPa | 49 | 61 |
| | | 2 | 1 |
| | | 3800 | 3250 |

Ces résultats montrent bien que la composition selon l'invention présente de bonnes propriétés thermiques et plastifiantes, tout en conservant les propriétés mécaniques du PLA, ainsi que son caractère dégradable en milieu naturel.

Ces mélanges maîtres ont ensuite été testés afin d'observer leur effet lorsqu'ils sont ajoutés à des matériaux composites.

Pour ce faire, des mélanges de PLA, de Polyhydroxyalkanoate, de farine végétale et de plastifiant ont été granulés en présence ou non d'un mélange maître PLA AMI7 à l'aide d'une extrudeuse corotative Clextral BC21 (L=600 mm, L/d=24) à 170°C.

On constate que l'ajout de 20% en masse de la composition selon l'invention permet d'améliorer la résistance thermique du matériau composite. En effet, la température de fléchissement sous charge passe de 39°C sans le mélange selon l'invention, à 51°C après ajout du mélange.

De même l'ajout de 20% en masse de la composition selon l'invention permet d'améliorer la fluidité à l'état fondu. En effet, la fluidité à chaud passe de 7g/10min sans le mélange, à 15g/10min après ajout du mélange-maître selon l'invention.

## Revendications

1. Utilisation d'une composition comprenant :
- entre 1 et 15% en poids de polyglycérol(s) fonctionnalisé(s),
- entre 25 et 94% en poids de bio-polymère(s), c'est-à-dire de polymère(s) biodégradable(s) et/ou bio-sourcé(s), un polymère bio-dégradable étant un polymère qui se dégrade par l'action de micro-organismes sous forme de CO2, d'eau et d'une nouvelle biomasse, et un polymère bio-sourcé étant un polymère issu en totalité ou en partie de ressources renouvelables,
- entre 5 et 60% en poids de farine(s) issue(s) de carbone végétal, une farine issue de carbone végétale étant une farine issue de céréales ou une farine ligno-cellulosique,
dans des matériaux composites pour améliorer leur fluidité à l'état fondu et leur résistance thermique.

2. Utilisation selon la revendication 1, **caractérisée en ce que** la farine issue de carbone végétal de la composition est une farine native de céréale ou d'origine ligno-cellulosique.

3. Utilisation selon la revendication 2, **caractérisée en ce que** la farine issue de carbone végétal est une farine amidonnée.

4. Utilisation selon l'une des précédentes revendications, **caractérisée en ce que** la composition comprend également un plastifiant.

5. Utilisation selon la revendication 4, **caractérisée en ce que** le plastifiant est compris dans la composition entre 1% et 20% en masse.

6. Utilisation selon l'une des revendications 4 ou 5, **caractérisée en ce que** le plastifiant est choisi parmi le glycérol, les dérivés de citrate et l'eau.

7. Utilisation selon l'une des précédentes revendications, **caractérisée en ce que** le polyglycérol fonctionnalisé est un ester de polyglycérol fonctionnalisé avec au moins une fonction acide choisie parmi les acides gras saturés, les acides gras mono insaturés et les acides gras poly-insaturés.

8. Utilisation selon l'une des précédentes revendications, dans des matériaux composites à base de polymère(s) biodégradable(s).

9. Utilisation selon l'une des précédentes revendications, dans des matériaux composites à base de polymère(s) biodégradable(s) chargé(s) en farine(s) végétale(s).

## Patentansprüche

1. Anwendung einer Zusammensetzung, die enthält:
- zwischen 1 und 15% Massenanteil funktionalisierte(s) Polyglycerin(e),
- zwischen 25 und 94% Massenanteil Bio-Polymere, d. h. biologisch abbaubare Polymere und/oder aus biologischen Ressourcen, wobei ein biologisch abbaubares Polymer ein Polymer ist, das sich durch die Aktion von Mikroorganismen in Form von CO₂, Wasser und einer neuen Biomasse abbaut, und ein Polymer aus biologischen Ressourcen ein Polymer ist, das vollständig oder teilweise aus erneuerbaren Ressourcen stammt,
- zwischen 5 und 60% Massenanteil Mehl(e) aus pflanzlichem Kohlenstoff, wobei ein Mehl aus pflanzlichem Kohlenstoff ein aus Getreide stammendes oder ein lignozellulosehaltiges Mehl ist,
in Verbundstoffen, um ihre Fließfähigkeit im schmelzflüssigen Zustand und ihre Temperaturbeständigkeit zu verbessern.

2. Anwendung nach Anspruch 1, **dadurch gekennzeichnet, dass** das Mehl aus pflanzlichem Kohlenstoff der Zusammensetzung ein Getreide- oder Zellulosemehl ist.

3. Anwendung nach Anspruch 2, **dadurch gekennzeichnet, dass** das Mehl aus pflanzlichem Kohlestoff ein Stärkemehl ist.

4. Anwendung nach einem der vorausgehenden Ansprüche, **dadurch gekennzeichnet, dass** die Zusammensetzung auch einen Weichmacher enthält.

5. Anwendung nach Anspruch 4, **dadurch gekennzeichnet, dass** der Weichmacher einen Massenanteil von 1 bis 20% in der Zusammensetzung hat.

6. Anwendung nach einem der Ansprüche 4 oder 5, **dadurch gekennzeichnet, dass** der Weichmacher aus einer Gruppe bestehend aus Glycerin, Zitratderivaten und Wasser ausgewählt wird.

7. Anwendung nach einem der vorausgehenden Ansprüche, **dadurch gekennzeichnet, dass** das funktionalisierte Polyglycerin ein mit mindestens einer Säurefunktion, ausgewählt aus gesättigten Fettsäuren, einfach und mehrfach ungesättigten Fettsäuren, funktionalisiertes Polyclycerin-Ester ist.

8. Anwendung nach einem der vorausgehenden Ansprüche in Verbundstoffen aus biologisch abbaubarem(-n) Polymer(en).

9. Anwendung nach einem der vorausgehenden Ansprüche in Verbundstoffen aus biologisch abbaubarem(-n) Polymer(en), das/die pflanzliche(s) Mehl(e) enthält/enthalten.

## Claims

1. Use of a composition comprising:
- between 1 and 15% by weight of functionalised polyglycerol(s),
- between 25 and 94% by weight of biopolymer(s), that is biodegradable and/or bio-sourced polymers, a biodegradable polymer being a polymer that degrades by the action of microorganisms in the form of CO₂, water and a new biomass, and a bio-sourced polymer being a polymer obtained completely or in part from renewable resources,
- between 5 and 60% by weight of flour(s) obtained from plant carbon, a flour obtained from plant carbon being a flour obtained from grains as well as lignocellulose flour,
in composite materials for improving the melt flow rate and the heat resistance thereof.

2. Use according to claim 1, **characterised in that** the flour obtained from plant carbon in the composition is a native flour of grain or of lignocellulose origin.

3. Use according to claim 2, **characterised in that** the flour obtained from plant carbon is a starchy flour.

4. Use according to any of the preceding claims, **characterised in that** the composition also comprises a plasticiser.

5. Use according to claim 4, **characterised in that** the plasticiser comprises between 1% and 20% by mass of the composition.

6. Use according to one of claims 4 or 5, **characterised in that** the plasticiser is selected from among glycerol, citrate derivatives and water.

7. Use according to any one of the preceding claims, **characterised in that** the functionalised polyglycerol is a functionalised polyglycerol ester with at least one acid group selected from among saturated fatty acids, monounsaturated fatty acids and polyunsaturated fatty acids.

8. Use according to any one of the preceding claims in composite materials based on biodegradable polymer(s).

9. Use according to any one of the preceding claims in composite materials based on biodegradable polymer(s) loaded with plant flour(s).
